# EUROPÄISCHE PATENTSCHRIFT

(11) **EP 2 540 201 B1**
(45) Veröffentlichungstag und Bekanntmachung des Hinweises auf die Patenterteilung: **08.03.2017**
(21) Anmeldenummer: 12172566.7
(22) Anmeldetag: 19.06.2012
(51) Int. Cl.: A47J 37/12

(54) **Friteuse**
Deep fat fryer
Friteuse

(30) Priorität: 30.06.2011 DE 202011050594 U
(43) Veröffentlichungstag der Anmeldung: 02.01.2013
(73) Patentinhaber: VOSS München Versorgungssysteme Vertriebsgesellschaft mbH, 85640 Putzbrunn (DE)
(72) Erfinder: Depper, Lothar, 81545 München (DE); Hauschild, Johannes, 6342 Niederndorf (AU)
(74) Vertreter: Naefe, Jan Robert

(56) Entgegenhaltungen:
- EP-A1- 0 919 173
- WO-A2-2008/089590
- DE-A1- 10 349 253

## Beschreibung

Die Erfindung betrifft eine Friteuse nach dem Oberbegriff des Anspruchs 1.

Aus der DE 197 47 678 A1 ist eine gattungsgemäße Friteuse bekannt, bei der ein geneigter Bodenwandungsabschnitt vorhanden ist und an eine Kaltölzone grenzt.

Nachteilig bei dieser Friteuse ist, dass im Fritierbecken Heizelemente in Form von Heizrohren zur Abgabe von Wärme eines Abgasbrenners an das Fritieröl vorgesehen sind. Derartige Rohre erfordern einen erheblichen Reinigungsaufwand. Des Weiteren ist die freie Konvektion des Fritieröls, insbesondere beim Anwärmen der Friteuse durch die Gegenstände im Fritierbecken behindert.

Hieraus resultiert auch, dass in der Kaltölzone eine nur unzureichende Anreicherung an Schwebstoffen, wie z.B. Paniermehl und dergleichen, stattfindet. Derartige Partikel, die beim Fritiervorgang in das Fritieröl gelangen, können sich bei dieser Friteuse an den Heizrohren bzw. auch an dem geneigten Gasbrenner unerwünschterweise anlagern und für eine vorzeitige Ölalterung sorgen.

Aus der EP 0919173 A1 ist eine weitere Friteuse bekannt.

Die DE 10349253 A1 offenbart eine Friteuse, die mittels eines Ceran-Feldes beheizt wird.

Aus der DE 103 49 253 A1 ist eine Friteuse bekannt, welche ein im Wesentlichen langgestrecktes quaderförmiges Fritierbecken besitzt, wobei in einer vertikal unteren Hälfte des Fritierbeckens schräg gestellte Heizplatten angeordnet sind, die zwischen sich eine Kaltölzone begrenzen sollen. Es hat sich herausgestellt, dass hier keine zuverlässige Abscheidung bzw. keine Kaltölzone realisiert ist, die Öltemperaturen in der Höhe von etwa 60° bis 90° im Fritierbetrieb zulässt.

Des Weiteren erweitert sich das Fritierbecken vertikal nach oben hin in Längsrichtung, wodurch eine Totzone entsteht, die die freie Konvektion des Fritieröls behindert.

Bei einer derartigen Friteuse ist durch beidseitige Heizung an schräg gestellten Seitenwänden die Umwälzung des aufzuwärmenden Fritieröls nicht optimal und verbesserungswürdig. Hierdurch entsteht ein hoher Energiebedarf, der für die schnelle Erwärmung des Fritieröls notwendig wird.

Aus der DE 10 2009 049 259 A1 ist eine Friteuse bekannt, die einen geneigten Bodenabschnitt aufweist, der mit einer Heizeinrichtung in Form einer Induktionsheizung versehen ist. Benachbart zur Heizeinrichtung dem Bediener der Friteuse zugewandt ist eine Kaltölzone vorgesehen, die sich in Querrichtung des Friteusenbeckens erstreckt. Oberhalb der Kaltölzone erweitert sich das Fritierbecken zum Rand hin und bildet somit eine Totzone, die für die freie Konvektion des aufzuwärmenden Fritieröls hinderlich ist.

Die Neigung des Bodenabschnittes mit der Induktionsheizung ist relativ gering ausgebildet, so dass eine zuverlässige Ansammlung von Schwebstoffen aus dem Fritieröl in der Kalzölzone, die auch als Abscheider wirken soll, nicht immer gewährleistet ist. Der entsprechende Neigungswinkel ist hier zu gering, was zu einem erhöhten Reinigungsaufwand der Heizfläche führt.

Des Weiteren erfordert eine Induktionsheizeinrichtung zumindest teilweise eine Ausbildung des Fritierbeckenbodens aus einem magnetisierbaren Metall. Üblicherweise sind derartige Fritierbecken aus Edelstahl (nicht magnetisch) hergestellt, so dass hier ein erhöhter Bauaufwand, beispielsweise ein zweischichtiger Bodenwandungsaufbau, erforderlich ist, bei dem zumindest eine Schicht ein magnetisierbares Metall ist.

Aufgabe der Erfindung ist es daher eine Friteuse anzugeben, die einerseits bei Erfüllung aller hygienischen Vorschriften leicht zu reinigen ist, wobei die mögliche Einsatzdauer eines Fritieröls verlängert ist.

Weiterhin soll die erfindungsgemäße Friteuse es ermöglichen, mit äußerst geringem Energieaufwand das Aufheizen einer definierten Fritierölmenge (z.B. 15 Liter) in kurzer Zeit zu ermöglichen.

Des Weiteren ist es Aufgabe der Erfindung, den konstruktiven Aufbau und somit die Montage und die Herstellung der Friteuse zu vereinfachen und somit eine kostengünstige Friteuse zur Verfügung zu stellen.

Des Weiteren soll eine schonende und nicht örtlich überhitzte Erwärmung und Warmhaltung des Fritieröls erfolgen.

Des Weiteren soll dafür gesorgt werden, dass Schwebstoffe beim Fritieren zuverlässig in der Kaltölzone absinken und dort liegen bleiben. Eine Ablagerung von Schwebstoffen auf einer beheizten Bodenwandung soll möglichst vermieden werden, damit über den zeitlichen Verlauf konstant gute Heizeigenschaften und Wärmeübergangseigenschaften von der Heizplatte an das Fritieröl gegeben sind.

Diese Aufgaben werden mit einer Friteuse mit den Merkmalen des Anspruchs 1 gelöst.

Vorteilhafte Ausführungsformen sind in den Unteransprüchen angegeben.

Eine erfindungsgemäße Friteusen ist in Anspruch 1 definiert und besitzt ein Fritierbecken aufweisend Längsbegrenzungswandungen und Seitenbegrenzungswandungen und eine Bodenwandung und einen eine Bodenwandung und eine Kaltölzone aufweisenden Boden, wobei sich die Kaltölzone entlang einer Längserstreckung des Fritierbeckens erstreckt und die Kaltölzone durch Längswandungen und Stirnseitenwandungen begrenzt ist. Die Friteuse zeichnet sich dadurch aus, dass beide Stirnseitenwandungen der Kaltölzone mit Längsbegrenzungswandungen des Fritierbeckens und zumindest eine Längswandung der Kaltölzone mit einer Seitenbegrenzungswandung des Fritierbeckens bis zu einem oberen Rand des Fritierbeckens eine ebene Wandung bildend fluchten und die Bodenwandung um 15° bis 45° zur Horizontalen geneigt und zur Kaltölzone abfallend angeordnet ist.

In besonders bevorzugter Ausführungsform ist die Bodenwandung zwischen 20° und 30° zur Horizontalen geneigt angeordnet.

Nach einer weiteren besonderen Ausführungsform ist die Neigung von einer ersten Seitenbegrenzungswandung des Fritierbeckens zur Kaltölzone hin abfallend ausgebildet, wobei die Kaltölzone die tiefste Stelle des Fritierbeckens bildet.

Erfindungsgemäss ist die Bodenwandung als Teil des Bodens des Fritierbeckens vollflächig beheizbar, mittels eines eine Glasplatte aufweisenden Ceranfeldes, welches die Bodenwandung bildet.

Eine Besonderheit einer Ausführungsform der erfindungsgemäßen Friteuse ist, dass innerhalb des Fritierbeckens neben der beheizbaren Bodenwandung keine weiteren Heizelemente im Volumen des Fritierbeckens vorhanden sind.

Die Kaltölzone ist in bevorzugter Art und Weise seitlich neben der Bodenwandung angeordnet und besitzt eine Breite, die etwa dem 0,1- bis 0,25-fachen, insbesondere dem 0,15- bis 0,2-fachen der lichten Weite des Fritierbeckens entspricht. In besonders bevorzugter Ausgestaltung ist die Höhe h der Kaltölzone etwa das 1,0- bis 1,7-fache der Breite b der Kaltölzone.

In einer weiteren Ausgestaltung der Erfindung weist die Bodenwandung eine Ausnehmung auf, die nahezu die gesamte Bodenwandung einnimmt. Die Ausnehmung ist durch eine Glasplatte eines Ceranheizfeldes verschlossen, so dass im Fritierbecken befindliches Fritieröl direkt beheizbar ist.

In einer weiteren Ausgestaltung der Erfindung ist die Bodenwandung geschlossen aus einem Blech gebildet und außenseitig gegen die Bodenwandung eine Heizkassette gesetzt, so dass die Bodenwandung über Wärmeleitung das Fritieröl erwärmt.

In einer besonderen Ausführungsform kann die Friteuse auch eine Korbhebeautomatik aufweisen.

Im Folgenden wird die Erfindung anhand der Zeichnung beispielhaft näher erläutert. Es zeigen:
- Figur 1:: eine erste isometrische Ansicht auf eine erfindungsgemäße Friteuse;
- Figur 2:: eine zweite isometrische Ansicht auf eine erfindungsgemäße Friteuse;
- Figur 3:: einen Querschnitt durch die erfindungsgemäße Friteuse in einer ersten Ausführungsform;
- Figur 4:: einen Querschnitt durch die erfindungsgemäße Friteuse in einer zweiten Ausführungsform.

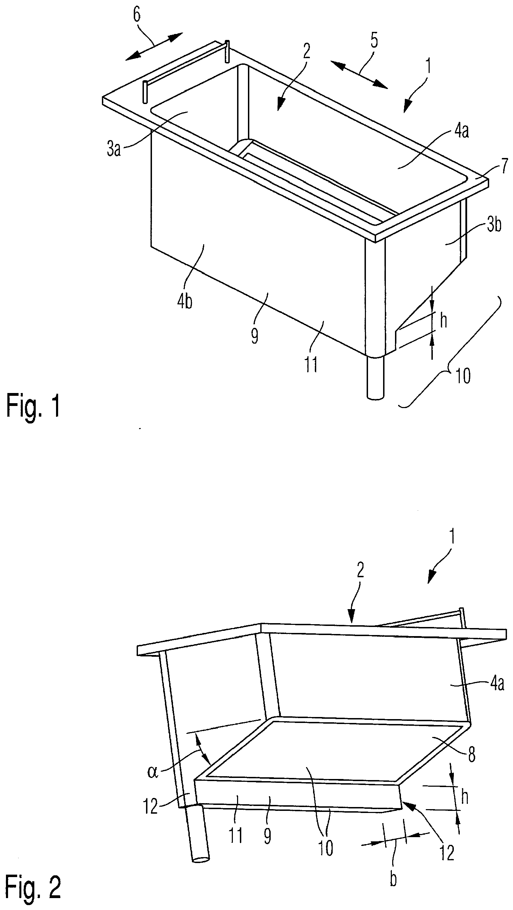

Eine erfindungsgemäße Friteuse 1 (Figuren 1, 2) besitzt ein Fritierbecken 2, welches durch Längsbegrenzungswandungen 3 und Seitenbegrenzungswandungen 4 begrenzt ist.

In einer Draufsicht ist das Fritierbecken 2 in etwa rechteckförmig mit einer Längsrichtung 5 und einer Querrichtung 6 ausgebildet. Ein vertikal oben umlaufender Rand 7 steht seitlich über die Längsbegrenzungswandungen 3a, 3b und Seitenbegrenzungswandungen 4a, 4b über und ermöglicht ein Einhängen in ein Fritiergestell (nicht gezeigt). Die Erstreckung des Fritierbeckens 2 in Querrichtung 6 ist geringer als die Erstreckung des Fritierbeckens 2 in Längsrichtung 5. Eine der Seitenbegrenzungswandungen 4a ist in ihrer vertikalen Erstreckung kürzer als die andere Seitenbegrenzungswandung 4b.

Am vertikal unteren Ende der Seitenbegrenzungswandung 4a geht diese in eine Bodenwandung 8 über. Die Bodenwandung 8 erstreckt sich in Längsrichtung 5 des Fritierbeckens von einer Längsbegrenzungswandung 3a bis zur anderen Längsbegrenzungswandung 3b. Die Bodenwandung 8 ist in Querrichtung 6 geneigt angeordnet und besitzt eine im Wesentlichen ebene Raumform. Im vertikal tiefer liegenden Bereich der Bodenwandung 8 grenzt diese an eine Kaltölzone 9 an, welche in etwa rinnenförmig ausgebildet ist und sich über die gesamte Längserstreckung 5 des Fritierbeckens 2 erstreckt. In Querrichtung 6 des Fritierbeckens gesehen besitzt die Kaltölzone 9 eine Breite, die in etwa dem 0,1- bis 0,25-, insbesondere dem 0,15- bis 0,2-fachen, der lichten Weite des Fritierbeckens 2 in Querrichtung 6 entspricht.

Eine Höhe h der Kaltölzone 9 beträgt in etwa das 1,0- bis 1,7-fache einer Breite b der Kaltölzone 9.

Die Neigung der Bodenwandung 8 gegenüber einer Horizontalen (Winkel α) beträgt bevorzugt 15° bis 45°, insbesondere etwa 20° bis 30°. Innerhalb dieser Neigungswinkel hat sich ein besonders geringes Ablagern von Schwebestoffen im Fritieröl während des Betriebs der Friteuse gezeigt. Des Weiteren stellt ein derartiger Neigungswinkel auch einen guten Kompromiss dar, der eine ausreichend große Dimensionierung der Kaltölzone 9, insbesondere in Querrichtung 6 des Fritierbeckens 2 gewährleistet und außerdem für eine ausreichende Konvektion und somit Umwälzung des Fritieröls während der Aufheizphase oder während des Betriebs zulässt.

Die Bodenwandung 8 bildet zusammen mit der Kaltölzone 9 den Boden 10 des Fritierbeckens 2.

Die Kaltölzone 9 ist dabei durch Längswandungen 11 und in Längsrichtung 5 durch Stirnseitenwandungen 12 begrenzt. Die Stirnseitenwandungen 12 der Kaltölzone 9 fluchten mit den Längsbegrenzungswandungen 3a, 3b des Fritierbeckens 2. Zumindest eine Längswandung 11 der Kaltölzone 9 fluchtet mit einer Seitenbegrenzungswandung 4b des Fritierbeckens. Die Seitenbegrenzungswandung 4b und die eine Längswandung 11 der Kaltölzone 9 sowie die Stirnseitenwandungen 12 der Kaltölzone 9 zusammen mit den Längsbegrenzungswandungen 3a, 3b des Fritierbeckens 2 bilden in vertikaler Richtung bis zum Rand 7 ebene Begrenzungsflächen. Hierdurch werden Totvolumina, die beim Aufwärmen bzw. beim Warmhalten des Fritieröls Totzonen für Konvektionsumwälzungen des Öls bilden könnten, zuverlässig vermieden.

Die Bodenwandung 8 besitzt in einer ersten Ausführungsform eine Ausnehmung 13, die bis auf Randbereiche 14 nahezu die gesamte Bodenwandung 8 einnimmt. Die Randbereiche 14 sind derart dimensioniert, dass Befestigungsrahmen 15 innerhalb der Ebene der Bodenwandung 8 angebracht werden können. Die Befestigungsrahmen 15 dienen zur Aufnahme einer Heizkassette 16. Die Heizkassette 16 ist mittels einer Montageschale 17 dichtend gegen die Randbereiche 14 der Bodenwandung 8 gesetzt. Die Heizkassette 16 weist eine beheizbare Glasplatte 18 auf, welche im Bereich der Ausnehmung 13 die Bodenwandung 8 bildet. Bei der Glasplatte 18 handelt es sich um eine vollflächig über die Fläche gleichmäßig beheizbare Ceranplatte.

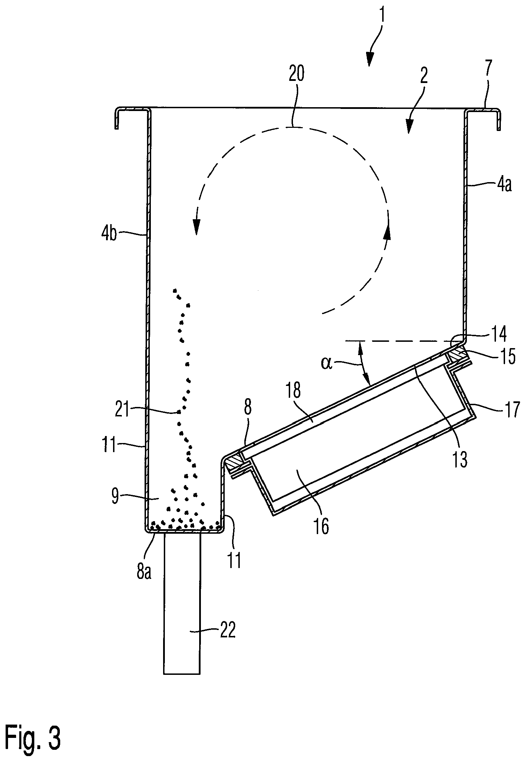

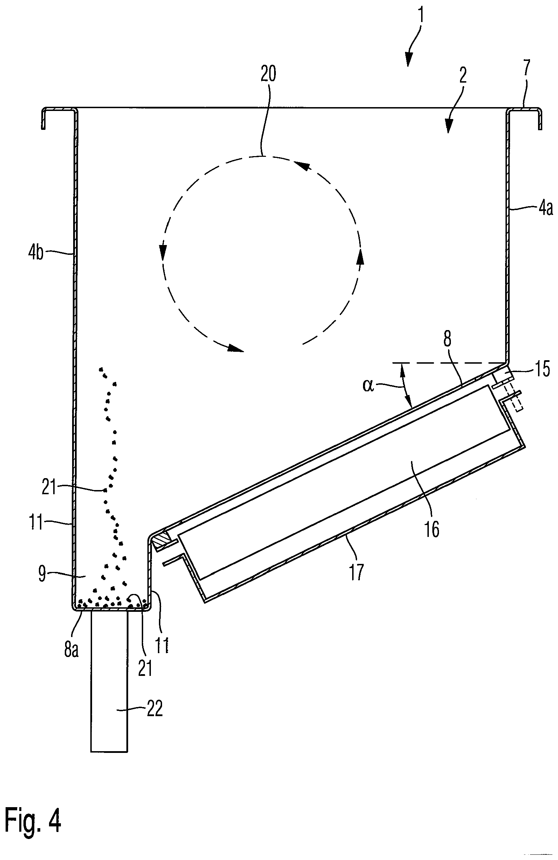

Alternativ zu der in Fig. 3 dargestellten Ausführungsform kann die Friteuse gemäß einer weiteren Ausführungsform (Fig. 4) auch eine durchgehende, aus Blech gebildete Bodenwandung 8 besitzen, bei dieser Ausführungsform ist dann die Heizkassette 16 von außen gegen die Blechwandung der Bodenwandung 8 gesetzt und heizt diese über Wärmeleitung auf. In der Darstellung gemäß Fig. 4 ist die Heizkassette 16 in einer Vormontagestellung noch mit einem Abstand zur Bodenwandung 8 gezeichnet. Sobald die Montageschale 17 befestigt ist, liegt ein direkter Kontakt vor. Diese Ausführungsform hat den Vorteil, dass eine vollkommen glattflächige und stufenlose Bodenwandung 8 im Inneren des Fritierbeckens 2 vorliegt, so dass eine vereinfachte Reinigung möglich ist.

Bei der erfindungsgemäß gewählten Ausgestaltung des Fritierbeckens, insbesondere im Zusammenspiel mit der schräg gestellten Bodenwandung und einer in Längsrichtung 5 des Fritierbeckens verlaufenden, an eine Seitenbegrenzungswandung 4b direkt angrenzende Kaltölzone hat besonders vorteilhafte Eigenschaften hinsichtlich der Fritierölalterung. Es wird ein besonders schonendes Erwärmen über eine große Fläche erreicht. Dadurch, dass im Fritierbecken keine weiteren Heizrohre, Heizstäbe oder dergleichen vorhanden sind, kann sich eine schematisch mit dem Pfeil 20 angedeutete Konvektion beim Anwärmen des Fritieröls ausbilden, wobei das Fritieröl im Bereich der vertikal kürzeren Seitenbegrenzungswandung 4a aufsteigt und im Bereich der vertikal längeren Seitenbegrenzungswandung 4b absinkt. Im Bereich der vertikal längeren Seitenbegrenzungswandung 4b ist korrespondierend, d. h. fluchtend zu dieser, die Kaltölzone 9 angeordnet und dient als ideales Auffangbecken für mit dem Ölstrom absinkende Schwebestoffe innerhalb des Fritieröls. Die Schwebestoffe sind hier in Fig. 3 schematisch mit dem Bezugszeichen 21 versehen. Die Schwebestoffe 21 reichern sich zuverlässig in der Kaltölzone an, insbesondere im Bereich einer Bodenwandung 8a der Kaltölzone. Mittels eines Auslasses 22 können die Schwebestoffe 21 leicht aus dem Fritierbecken 2 im Rahmen einer Reinigung entfernt werden.

Versuche haben gezeigt, dass mit der erfindungsgemäßen Anordnung der Heizkassette 16, insbesondere deren Neigung um den Winkel α zur Horizontalen im Zusammenspiel mit einem asymmetrisch angeordneten Kaltölzone 9 und den in vertikaler Richtung ebenen, keine Totzonen bildenden Längs- bzw. Seitenbegrenzungswandungen 4a, 4b, 3a, 3b des Fritierbeckens, ein besonders energiesparender Betrieb der Friteuse möglich ist. Bei üblichen Ölinhalten von ca. 15 Litern derartiger gewerblich verwendbarer Friteusen konnten beispielsweise die Aufheizzeiten gegenüber bisher bekannten Friteusen auf eine Fritieröltemperatur von 170° bis 180° von üblicherweise 25 bis 30 Minuten auf 18 Minuten reduziert werden. Hierbei kann die Anschlussleistung auf 4,0 kW begrenzt werden. Übliche Friteusen gemäß dem Stand der Technik benötigen Anschlussleistungen von etwa 8 kW bis 10 kW pro Fritierbecken.

Innerhalb weiterer Versuche ist ermittelt worden, dass bei der erfindungsgemäßen Friteuse die Temperatur der Glasoberfläche der Heizkassette, des Ceranfeldes, lediglich 30° bis 40° größer sein muss als die eingestellte Öltemperatur, z. B. 170° im Betrieb. Dies bedeutet, dass das Öl an keiner Stelle des Fritierbeckens 2 wesentlich höher als 200°C bis 210°C erhitzt werden muss. Hierdurch ist ein erheblicher Beitrag zur schonenden Behandlung des Fritieröls gewährleistet. Verbrennungseffekte an überheißen Heizeinrichtungen sind vermieden. Zurückgeführt wird eine derartige geringe Temperaturdifferenz auf den hohen Wärmeübergangswirkungsgrad, weil nahezu die gesamte Bodenwandung beheizbar ist und sich durch die besondere Beckengestaltung eine äußerst effektive Konvektion ausbilden kann, die zu dieser gleichmäßigen Öltemperierung beiträgt. Gleichwohl ist eine hocheffektive Kaltölzone vorhanden, in der im Betrieb der Friteuse Öl mit etwa 60°C bis 90°C vorliegt. Durch die besondere Beckengestaltung geschieht eine Durchmischung des Heißöls, welches an der Konvektion teilnimmt, und des Kaltöls der Kaltölzone nur in geringem Maße, was zudem zur gleichmäßigen Aufheizung und schonenden Ölbehandlung beiträgt.

Durch die besonders schonende Ölerwärmung und die besonders gleichmäßige Verteilung des Öls durch die freie Konvektion 20 im Fritierbecken kann das Fritieröl gegenüber bisherigen Friteusen wesentlich länger im Einsatz bleiben. Lediglich am Ende eines Betriebszyklus sollte das Öl, um es von den Schwebstoffen 21 zu befreien, gefiltert werden. Ein Ölaustausch ist aber gegenüber bisherigen Friteusen erst nach etwa doppelt so langer Zeit notwendig.

Das Gehäuse der Friteuse 1 besteht insbesondere aus Chrom-Nickel-Stahl, bevorzugt mit einer Materialstärke von 2 mm.

Eckbereiche des Fritierbeckens 2 sowie Übergänge zu Bodenwandungen im Bereich des Fritierbeckens 2 und der Kaltölzone 9 sind bevorzugt gerundet ausgebildet, damit eine erleichterte Reinigung gewährleistet ist und ein Absetzen von unerwünschten Ablagerungen in Eckbereichen verhindert ist. Soweit also in der vorgenannten Beschreibung von ebenen Flächen gesprochen wird, sind hiervon die Rundungen, wie sie auch im Stand der Technik bereits üblich sind, ausgenommen. Diese Rundungen dienen lediglich zur Erleichterung der Reinigung.

Gemäß einer weiteren Weiterbildung der Erfindung kann die erfindungsgemäße Friteuse selbstverständlich mittels einer Korbhebeautomatik (nicht gezeigt) oder anderen Einhängevorrichtungen für Fritierkörbe zur Aufnahme des Fritiergutes ausgerüstet sein.

Die erfindungsgemäße Friteuse vereinigt viele Vorteile in sich, die insbesondere zur Lösung der oben erwähnten Aufgaben dienen.

### Bezugszeichenliste:

- 1: Friteuse
- 2: Fritierbecken
- 3a: Längsbegrenzungswandung
- 3b: Längsbegrenzungswandung
- 4a: Seitenbegrenzungswandung
- 4b: Seitenbegrenzungswandung
- 5: Längsrichtung
- 6: Querrichtung
- 7: oberer umlaufender Rand
- 8: Bodenwandung
- 8a: Bodenwandung
- 9: Kaltölzone
- 10: Boden
- 11: Längswandungen
- 12: Stirnseitenwandungen
- 13: Ausnehmung
- 14: Randbereiche
- 15: Befestigungsrahmen
- 16: Heizkassette
- 17: Montageschale
- 18: beheizbare Glasplatte
- 19 b20: Pfeil / Konvektion
- 21: Schwebestoffe
- 22: Auslass

- h: Höhe der Kaltölzone 9
- b: Breite der Kaltölzone 9

## Patentansprüche

1. Friteuse mit einem Fritierbecken (2) aufweisend Längsbegrenzungswandungen (3a, 3b) und Seitenbegrenzungswandungen (4a, 4b) und einen eine Bodenwandung (8) und eine Kaltölzone (9) aufweisenden Boden (10), wobei sich die Kaltölzone (9) entlang einer Längsrichtung (6) des Fritierbeckens (2) erstreckt, wobei die Kaltölzone (9) durch Längswandungen (11) und Stirnseitenwandungen (12) begrenzt ist,
wobei beide Stirnseitenwandungen (12) der Kaltölzone (9) mit Längsbegrenzungswandungen (3a, 3b) des Fritierbeckens (2) und zumindest eine Längswandung (11) der Kaltölzone (9) mit einer Seitenbegrenzungswandung (4a, 4b) des Fritierbeckens (2) bis zu einem oberen Rand (7) des Fritierbeckens (2) jeweils eine ebene Wandung bildend fluchtet und die Bodenwandung (8) um 15° bis 45° zur Horizontalen geneigt angeordnet ist, wobei sie an ihrem tiefer liegenden Ende in die Kaltölzone (9) mündet,
**dadurch gekennzeichnet,**
**dass** die Bodenwandung (8) mittels eines Ceranfelds, welches die Bodenwandung bildet vollflächig beheizt ist.

2. Friteuse nach Anspruch 1, **dadurch gekennzeichnet, dass** die Bodenwandung (8) um etwa 20° bis 30° zur Horizontalen geneigt angeordnet ist.

3. Friteuse nach Anspruch 1 oder 2, **dadurch gekennzeichnet, dass** die Neigung von einer ersten Seitenbegrenzungswandung (4a, 4b) des Fritierbeckens (2) zur Kaltölzone (9) abfallend ausgebildet ist.

4. Friteuse nach einem der vorangegangenen Ansprüche, **dadurch gekennzeichnet, dass** keine weiteren Mittel zum Beheizen des Volumens des Fritierbeckens (2) innerhalb des Volumens des Fritierbeckens (2) vorgesehen sind.

5. Friteuse nach einem der vorangegangenen Ansprüche, **dadurch gekennzeichnet, dass** die Kaltölzone (9) in ihrer Breite etwa das 0,1- bis 0,25-, insbesondere 0,15- bis 0,2-fache der Breite des Fritierbeckens (2) einnimmt.

6. Friteuse nach einem der vorangegangenen Ansprüche, **dadurch gekennzeichnet, dass** eine Höhe (h) der Kaltölzone (9) etwa das 1,0- bis 1,7-fache einer Breite (b) der Kaltölzone (9) beträgt.

7. Friteuse nach einem der vorangegangenen Ansprüche, **dadurch gekennzeichnet, dass** die Friteuse (1) eine Korbhebeautomatik besitzt.

## Claims

1. A deep fryer with a fryer vat (2) having length-delimiting walls (3a, 3b) and side-delimiting walls (4a, 4b), and a bottom (10) that has a bottom wall (8) and a cold oil zone (9); the cold oil zone (9) extends along a longitudinal direction (6) of the fryer vat (2); and the cold oil zone (9) is delimited by longitudinal walls (11) and end walls (12);
the two end walls (12) of the cold oil zone (9) are each flush with respective length-delimiting walls (3a, 3b) of the fryer vat (2) and at least one longitudinal wall (11) of the cold oil zone (9) is flush with a side-delimiting wall (4a, 4b) of the fryer vat (2) up to an upper edge (7) of the fryer vat (2), forming a respective flat wall and the bottom wall (8) is inclined by 15° to 45° relative to the horizontal, its deeper end feeding into the cold oil zone (9),
**characterized in that**
the bottom wall (8) is heated over its entire area by means of a glass cooktop that constitutes the bottom wall.

2. The deep fryer according to claim 1, **characterized in that** the bottom wall (8) is inclined by approximately 20° to 30° relative to the horizontal.

3. The deep fryer according to claim 1 or 2, **characterized in that** the inclination of a first side-delimiting wall (4a, 4b) of the fryer vat (2) to the cold oil zone (9) is embodied as sloped.

4. The deep fryer according to one of the preceding claims, **characterized in that** no other means are provided for heating the volume of the fryer vat (2) inside the volume of the fryer vat (2).

5. The deep fryer according to one of the preceding claims, **characterized in that** the width of the cold oil zone (9) takes up approximately 0.1 to 0.25, in particular 0.15 to 0.2 times the width of the fryer vat (2).

6. The deep fryer according to one of the preceding claims, **characterized in that** a height (h) of the cold oil zone (9) is approximately 1.0 to 1.7 times a width (b) of the cold oil zone (9).

7. The deep fryer according to one of the preceding claims, **characterized in that** the deep fryer (1) has an automated basket lifter.

## Revendications

1. Friteuse comportant une cuve à friture (2) pourvue de parois de délimitation longitudinale (3a, 3b) et de parois de délimitation latérale (4a, 4b) et d'un fond (10) présentant une paroi de fond (8) et une zone à huile froide (9), la zone à huile froide (9) s'étendant le long d'une direction longitudinale (6) de la cuve à friture (2), la zone à huile froide (9) étant délimitée par des parois latérales (11) et par des parois frontales (12),
les deux parois frontales (12) de la zone à huile froide (9) étant en alignement avec des parois de délimitation longitudinale (3a, 3b) de la cuve à friture (2) et au moins une paroi longitudinale (11) de la zone à huile froide (9) étant en alignement avec une paroi de délimitation latérale (4a, 4b) de la cuve à friture (2) jusqu'à un bord supérieur (7) de la cuve à friture (2) en formant une paroi plane respective, et la paroi de fond (8) étant agencée de façon inclinée de 15° à 45° par rapport à l'horizontale en débouchant dans la zone à huile froide (9) à son extrémité située plus bas,
**caractérisée en ce que**
la paroi de fond (8) est chauffée sur toute la surface au moyen d'une plaque vitrocéramique qui constitue la paroi de fond.

2. Friteuse selon la revendication 1, **caractérisée en ce que** la paroi de fond (8) est agencée de façon inclinée d'environ 20° à 30° par rapport à l'horizontale.

3. Friteuse selon la revendication 1 ou 2, **caractérisée en ce que** l'inclinaison est réalisée de manière à descendre d'une première paroi de délimitation latérale (4a, 4b) de la cuve à friture (2) jusqu'à la zone à huile froide (9).

4. Friteuse selon l'une des revendications précédentes, **caractérisée en ce qu'**aucun autre moyen pour chauffer le volume de la cuve à friture (2) n'est prévu à l'intérieur du volume de la cuve à friture (2).

5. Friteuse selon l'une des revendications précédentes, **caractérisée en ce que** la zone à huile froide (9) est en largeur approximativement 0,1 à 0,25 fois, en particulier 0,15 à 0,2 fois la largeur de la cuve à friture (2).

6. Friteuse selon l'une des revendications précédentes, **caractérisée en ce qu'**une hauteur (h) de la zone à huile froide (9) est approximativement 1,0 à 1,7 fois une largeur (b) de la zone à huile froide (9).

7. Friteuse selon l'une des revendications précédentes, **caractérisée en ce que** la friteuse (1) possède un levage automatique de panier.
